Europäisches Patentamt

European Patent Office

Office européen des brevets

(11) Veröffentlichungsnummer: **0 080 027**
**A2**

(12) # EUROPÄISCHE PATENTANMELDUNG

(21) Anmeldenummer: **82107563.7**

(51) Int. Cl.³: **G 09 F 19/18**, G 03 B 21/08

(22) Anmeldetag: **19.08.82**

(30) Priorität: **28.10.81 DE 3142725**

(43) Veröffentlichungstag der Anmeldung: **01.06.83**
**Patentblatt 83/22**

(84) Benannte Vertragsstaaten: **AT CH FR GB IT LI NL SE**

(71) Anmelder: **Dr. Johannes Heidenhain GmbH,
Nansenstrasse 17, D-8225 Traunreut (DE)**

(72) Erfinder: **Mücke, Joachim B., Dipl.-Ing.,
Wasserlohstrasse 3a, D-8224 Egerer-Chieming (DE)**
Erfinder: **Michel, Dieter, Ing. grad., Langauenstrasse 12,
D-8220 Traunstein (DE)**

(54) **Anordnung zur Darstellung von Informationen.**

(57) Bei einer Anordnung zur gleichzeitigen oder wechselweisen, vorzugsweise parallaxenfreien Überlagerung oder Darstellung von mit elektronischen und optischen Mitteln erzeugten Informationen wird ein mehrfarbiges Bild mittels einer Auflicht-Projektionseinrichtung (3') auf dem Leuchtschirm (2') einer Kathodenstrahlröhre (1') abgebildet; gleichzeitig können elektronisch erzeugte Symbole bezüglich des mehrfarbigen Bilds auf dem Leuchtschirm (2') dem mehrfarbigen Bild überlagert werden.

- 1 -

DR. JOHANNES HEIDENHAIN GmbH          22. Oktober 1981

Anordnung zur Darstellung von Informationen

================================================

Die Erfindung betrifft eine Anordnung zur gleichzeitigen oder wechselweisen, vorzugsweise parallaxenfreien Überlagerung oder Darstellung von mit elektronischen und optischen Mitteln erzeugten Informationen, insbesondere von mehrfarbigen Bildern und diesen überlagerten Symbolen.

In der Zeitschrift "Wehrtechnik" 10/1979 ist auf Seite 34, rechte Spalte, Absatz 2 das Problem beschrieben, einen Kartenhintergrund mit aktuellen Lagesymbolen auf dem Schirm einer Kathodenstrahlröhre in Übereinstimmung zu bringen. Es wurden Sonderanfertigungen derartiger Röhren benutzt, die die Rückprojektion einer Karte durch ein besonderes Fenster auf den Phosphorschirm ermöglichen. Allerdings traten bei derartigen elektronischen Anzeigebaueinheiten Schwierigkeiten mit der Positionierung auf.

Der Erfindung liegt die Aufgabe zugrunde, eine Anordnung zur Überlagerung und Darstellung von elektronisch und optisch erzeugten Informationen der

- 2 -

oben erwähnten Gattung anzugeben, die die obigen
Nachteile vermeidet und sich auch mit handelsüblichen Standard-Anzeigebaueinheiten ohne Eingriffe
in dieselben realisieren läßt.

Diese Aufgabe wird erfindungsgemäß im wesentlichen
durch das kennzeichnende Merkmal des Anspruchs 1
gelöst. Vorteilhafte Ausgestaltungen der Erfindung
entnimmt man den Unteransprüchen.

Die mit der Erfindung erzielten Vorteile bestehen
insbesondere darin, daß optisch und elektronisch
erzeugte Informationen hoher Güte exakt zueinander positioniert werden können und daß praktisch
keine Einbuße an Informationsgehalt auftritt. Die
Anordnung weist eine einfache Bauweise auf, da
keine Sonderanfertigungen erforderlich sind, sondern konventionelle Anzeigebaueinheiten verwendet
werden können.

Ausführungsbeispiele der Erfindung sind in der
Zeichnung dargestellt und werden im folgenden näher
erläutert.

Es zeigen

Figur 1    eine erste Anordnung zur gleichzeitigen parallaxenfreien Darstellung von Informationen,

Figur 2    eine bevorzugte Anordnung und

Figur 3    eine weitere Anordnung nach der
Erfindung.

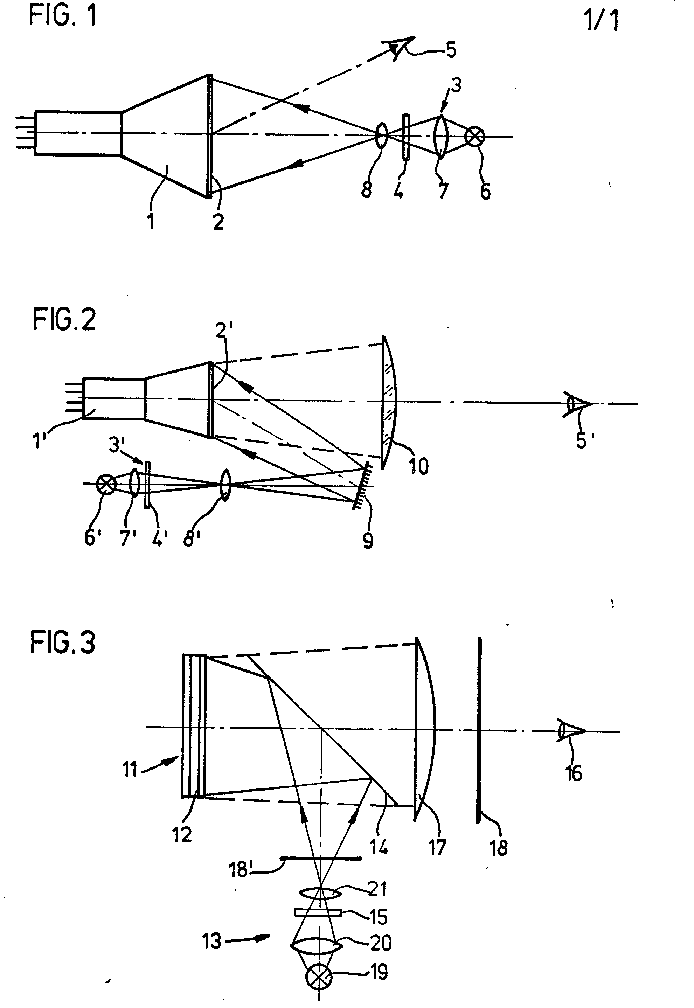

In Figur 1 ist eine Anzeigebaueinheit in Form
einer Kathodenstrahlröhre 1 mit einem Leuchtschirm 2 dargestellt, auf den erfindungsgemäß mittels
einer Auflicht-Projektionseinrichtung 3 von einem

- 3 -

Diapositiv 4 unmittelbar ein mehrfarbiges Bild abgebildet wird, das von einem Betrachter 5 schräg zum Leuchtschirm 2 beobachtet werden kann. Die Auflicht-Projektionseinrichtung 3 besteht aus einer Lampe 6, einem Kondensor 7 und einem Objektiv 8. Gleichzeitig kann dem optischen Bild ein elektronisches Bild parallaxenfrei auf dem Leuchtschirm 2 mittels eines Kathodenstrahls überlagert werden; dieses elektronische Bild besteht beispielsweise aus Symbolen bezüglich des optischen Bildes.

In einer bevorzugten Anordnung nach Figur 2 wird ein mehrfarbiges Bild von einem Diapositiv 4' mittels einer Auflicht-Projektionseinrichtung 3' mit Hilfe eines Umlenkspiegels 9 schräg auf einen Leuchtschirm 2' einer Kathodenstrahlröhre 1' abgebildet, das von einem Betrachter 5' durch eine Vergrößerungslupe 10 beobachtet werden kann. Die Auflicht-Projektionseinrichtung 3' besteht aus einer Lampe 6', einem Kondensor 7' und einem Objektiv 8'. Ebenfalls kann ein elektronisches Bild gleichzeitig dem optischen Bild parallaxenfrei auf dem Leuchtschirm 2' mittels eines Kathodenstrahls überlagert werden, das beispielsweise aus Symbolen bezüglich des optischen Bildes besteht. Diese bevorzugte Anordnung besitzt den Vorteil, daß störende Reflexe der Austrittspupille des Objektivs 8' auf dem Leuchtschirm 2' vermieden werden.

In einer weiteren Anordnung gemäß Figur 3 wird ein mehrfarbiges Bild von einem Diapositiv 15 mittels einer Auflicht-Projektionseinrichtung 13 über einen halbdurchlässigen Spiegel 14 auf die Schichtenkombination 12 einer Flüssigkristall-Anzeige 11

- 4 -

abgebildet, das von einem Betrachter 16 durch eine Vergrößerungslupe 17 und ein Polarisationsfilter 18 beobachtet werden kann. Die Aúflicht-Projektionseinrichtung 13 besteht aus einer Lampe 19, einem Kondensor 20 und einem Objektiv 21. Gleichzeitig kann ein elektronisches Bild dem optischen Bild parallaxenfrei auf der Schichtenkombination 12 der Flüssigkristall-Anzeige 11 überlagert werden, das beispielsweise aus Symbolen bezüglich des optischen Bildes besteht. Störende Reflexe der Austrittspupille des Objektivs 21 auf der Schichtenkombination 12 werden durch Polarisationsfilter 18, 18' vermieden.

In nicht dargestellter Weise können elektronische und optische Informationen auch auf einer Elektroluminiszenz-Anzeige überlagert dargestellt werden.

Des weiteren können beispielsweise auch alphanumerische und graphische Informationen überlagert werden.

In einer Anwendung der erfindungsgemäßen Anordnung werden in besonders vorteilhafter Weise farbige Mikrolandkarten, Stadtpläne oder dgl. mit elektronisch erzeugten Symbolen überlagert. Derartige Symbole können beispielsweise aus Markierungen oder Hinweisen zur Erläuterung des optischen Bildes z. B. in Form einer Mikrolandkarte bestehen.

- 5 -

Ansprüche
=========

1.) Anordnung zur gleichzeitigen oder wechselweisen, vorzugsweise parallaxenfreien Überlagerung oder Darstellung von mit elektronischen und optischen Mitteln erzeugten Informationen, insbesondere von mehrfarbigen Bildern und diesen überlagerten Symbolen, dadurch gekennzeichnet, daß die optische Information mittels einer Auflicht-Projektionseinrichtung (3, 3', 13) unmittelbar auf eine die elektronische Information erzeugende Schicht (2, 2') oder Schichtenkombination (12) einer an sich bekannten Anzeigebaueinheit (1, 1', 11) abgebildet wird.

2.) Anordnung nach Anspruch 1, dadurch gekennzeichnet, daß die Anzeigebaueinheit (1, 1') eine Kathodenstrahlröhre ist.

3.) Anordnung nach Anspruch 1, dadurch gekennzeichnet, daß die Anzeigebaueinheit (11) eine Flüssigkristall-Anzeige ist.

4.) Anordnung nach Anspruch 1, dadurch gekennzeichnet, daß die Anzeigebaueinheit eine Elektroluminiszenz-Anzeige ist.

5.) Anordnung nach Anspruch 1, dadurch gekennzeichnet, daß die optische Information mittels der Auflicht-Projektionseinrichtung (3') über einen Umlenkspiegel (9) schräg auf die Schicht (2') oder Schichtenkombination (12) der Anzeigebaueinheit (1', 11) abgebildet wird und daß die Schicht (2') oder

- 6 -

Schichtenkombination (12) über eine
Vergrößerungslupe (10) betrachtet wird.

6.) Anordnung nach Anspruch 1, dadurch gekennzeichnet, daß die optische Information mittels der Auflicht-Projektionseinrichtung (13) über einen halbdurchlässigen Spiegel (14) auf die Schicht (2') oder Schichtenkombination (12) abgebildet wird und daß die Schicht (2') oder Schichtenkombination (12) über eine Vergrößerungslupe (17) und vorzugsweise ein Polarisationsfilter (18) betrachtet wird.

7.) Anwendung der Anordnung nach Anspruch 1, zur Abbildung von Mikrolandkarten, Stadtplänen oder dergleichen.

FIG. 1

FIG.2

FIG.3